(19) **Europäisches Patentamt / European Patent Office / Office européen des brevets**

(11) **EP 4 629 557 A1**

(12) **EUROPEAN PATENT APPLICATION**

(43) Date of publication:
08.10.2025 Bulletin 2025/41

(21) Application number: 24168520.5

(22) Date of filing: 04.04.2024

(51) International Patent Classification (IPC):
*H04L 9/08* (2006.01)  *G06Q 20/06* (2012.01)

(52) Cooperative Patent Classification (CPC):
**H04L 9/0852; G06Q 20/065; G06Q 20/3829;
G06Q 20/389; G06Q 20/401; G06Q 20/405**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Mastercard International Incorporated
Purchase, NY 10577 (US)**

(72) Inventor: **MALEKI, Mehrdad
Maynooth, W23 TR81 (IE)**

(74) Representative: **Murgitroyd & Company
165-169 Scotland Street
Glasgow G5 8PL (GB)**

(54) **METHODS AND SYSTEMS FOR ENABLING USE OF A QUANTUM CURRENCY**

(57) A system 600 for enabling use of a quantum currency comprises: a quantum currency generator 602; a quantum currency verifier 604; and a physical system 606 comprising a memory 608 configured to store a currency state. The quantum currency generator 602 is configured to generate a currency state which is a quantum state generated using a private key that is representative of an amount of a quantum currency. The quantum currency generator 602 is configured to write the currency state to a memory of a physical system. The quantum currency verifier 604 is configured to generate a verification result which indicates whether the currency state in the memory 608 of the physical system corresponds to a quantum state generated and/or written by the quantum currency generator 602.

Figure 3

**Description**

**FIELD OF THE INVENTION**

The present disclosure relates to a quantum currency. The present disclosure more particularly relates to methods, systems and tools for generating a quantum currency, for verifying the authenticity of the quantum currency and for using the quantum currency. The present disclosure may find particular use in preventing transaction fraud and theft in currency systems.

**BACKGROUND TO THE INVENTION**

Traditional currency systems typically rely on physical objects having a predetermined value to enable transactions. For example, transactions may involve the exchange of coins and/or notes corresponding to a predetermined amount of a currency for particular goods and/or services. A well-known drawback of such traditional currency systems is that they are susceptible to forgeries, that is, the coins and notes on which the system relies may be accurately copied by illegitimate entities. While security features such as serial numbers or watermarks may be used to increase the complexity of producing forgeries, it may be impractical to verify the authenticity of such security features during the short time that a transaction takes place. Furthermore, once realistic forgeries are in circulation it is difficult to identify and/or destroy them.

Digital technologies have helped to transform traditional currency systems into the modern currency systems in wide use today. Modern digital currencies typically rely on advanced cryptographic techniques and the secure transfer of information between the parties to a transaction. In a typical example, a user may possess a credit or debit card and be in possession of a user secret (e.g. a PIN). Initially, the user provides the credit or debit card and the secret to a merchant. The merchant then sends a request to a central authority, such as a bank, asking for the central authority to transfer funds from an account associated with the user to an account associate with the merchant. The request includes information derived from the credit or debit card and the user secret. If the central authority verifies that the information received from the merchant is authentic, then the central bank fulfils the request of the merchant.

While modern digital currency systems do provide an increased level of security and verification not available in traditional systems, digital currency systems are still susceptible to forgery, for example if the information contained in the credit card is cloned or copied, and/or if the user secret is stolen or successfully inferred. Furthermore, the security of such digital currency systems is reliant on cryptographic protocols, such as RSA. While such protocols are thought of as being classically secure, they are not 'quantum safe' i.e. they are susceptible to 'brute force' attacks from quantum computers. As such, the recent rise of more powerful quantum computers poses a potential threat to the security of modern digital currency systems.

The present disclosure has been devised to mitigate or overcome at least some of the above-mentioned problems.

**SUMMARY OF THE DISCLOSURE**

In accordance with an aspect of the present disclosure, there is provided a method for implementation by a quantum currency generator, the method comprising: creating a public key and a private key, wherein the public key comprises a number $n$, a divisor $m$ and/or a subgroup $H$ of order $m$, and wherein the private key comprises a group $G$ and/or an action $\phi$, wherein $H$ is a subgroup of $G$ and wherein m is a random divisor of $n$; generating a currency state, wherein the currency state is a quantum state that is representative of an amount of a quantum currency and wherein the currency state is generated using the private key and the public key; writing the currency state to a memory of a physical system such that the currency state is stored in the memory of the physical system and is configured to be accessed by a quantum currency verifier for verification of the currency state. Advantageously, the method for generating a quantum currency is secure because, by the no-cloning theorem, a counterfeiter cannot reproduce the currency state.

In some embodiments, the method further comprises publishing the public key. Advantageously, publishing the public key while keeping the private key secret means that a counterfeiter cannot reproduce a verifiable currency state.

In some embodiments, the method further comprises generating a serial number. Advantageously, the serial number can be a unique serial number used to generate the currency state.

In some embodiments, generating the currency state comprises generating an initial quantum state.

In some embodiments, generating the currency state comprises generating an intermediate quantum state.

In some embodiments, generating the currency state comprises applying the serial number to the initial quantum state to generate an intermediate quantum state.

In some embodiments, generating the currency state comprises generating the currency state by measuring and/or collapsing the intermediate quantum state.

In some embodiments, the memory of the physical system comprises a plurality of qubits.

In some embodiments, the method further comprises storing the currency state in the plurality of qubits.

In some embodiments, the method further comprises storing a representation of the generated currency state in a ledger.

In accordance with another aspect of the present disclosure, there is provided a method for implementation by a quantum currency verifier, the method comprising: accessing a currency state stored in a memory of a physical system; receiving, from a quantum currency generator, a public key; and calculating a verification result, wherein the verification result is calculated using the quantum state and the public key, and wherein the verification result indicates whether the currency state corresponds to a quantum state generated and/or written by a quantum currency generator. Advantageously, the quantum currency verifier is able to verify the currency state without destroying the currency state.

In some embodiments, calculating the verification result comprises performing a Quantum Fourier Transform, QFT, on the quantum state.

In some embodiments, calculating the verification result comprises generating a verification result based on a comparison of the QFT with the public key.

In some embodiments, the method further comprises permitting a transaction in response to the verification result indicating that the currency state corresponds to a quantum state generated and/or written by a quantum currency generator.

In some embodiments, the method further comprises blocking a transaction in response to the verification result indicating that the currency state corresponds to a quantum state generated and/or written by a quantum currency generator.

In some embodiments, the method further comprises erasing the memory of the physical system in response to the verification result indicating that the currency state does not correspond to a quantum state generated and/or written by a quantum currency generator.

In some embodiments, erasing the memory of the physical system comprises collapsing the currency state.

In some embodiments, erasing the memory of the physical system comprises causing each qubit of the plurality of qubits to be in a ground state.

In accordance with another aspect of the present disclosure, there is provided a system for enabling use of a quantum currency, the system comprising: a quantum currency generator; a quantum currency verifier; and a physical system comprising a memory configured to store a currency state.

In accordance with another aspect of the present disclosure, there is provided a physical system for storing a quantum currency, the physical system comprising a memory, wherein the memory is configured for: storing a currency state generated by a quantum currency generator; and being accessed by a quantum currency verifier for verification of the currency state. Advantageously, the physical system can be used to safely and securely store a verifiable quantum currency generated by a quantum currency generator.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

## BRIEF DESCRIPTION OF THE DRAWINGS

One or more embodiments of the disclosure will now be described, by way of example only, with reference to the accompanying drawings, in which:

Figure 1 shows an example computer system for implementing aspects of the present invention;

Figure 2 shows a network environment for implementing aspects of the present invention;

Figure 3 illustrates a method for enabling use of a quantum currency in accordance with an aspect of the present invention;

Figure 4 shows a further method for enabling use of a quantum currency in accordance with an aspect of the present invention;

Figure 5 shows a further method for enabling use of a quantum currency in accordance with an aspect of the present invention;

Figure 6 shows an example system for implementing aspects of the present invention;

Figure 7 shows a function for implementing aspects of the present invention;

Figure 8 shows a histogram according to an example;

Figure 9 shows a histogram according to an example; and

Figure 10 shows a histogram according to an example.

Note that the drawings are schematic and accompany the description, illustrating preferred and exemplary embodiments and not necessarily being drawn to scale.

## DETAILED DESCRIPTION

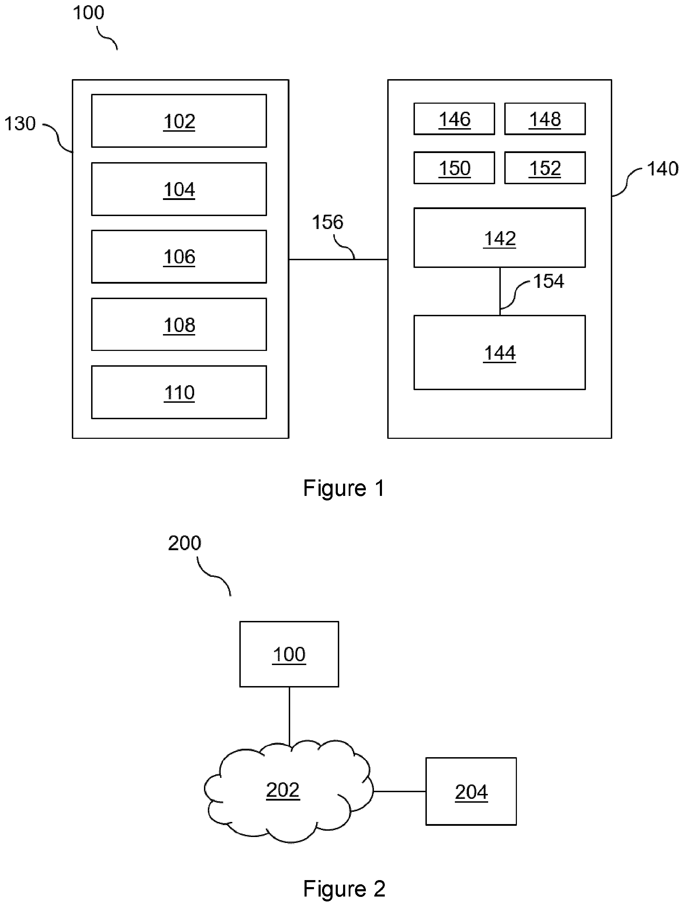

Figure 1 shows an example computing system 100 for implementing the present invention. One or more such computer systems 100 are arranged to perform or execute one or more steps of the methods described herein. In particular, software running on one or more computer systems 100 perform one or more steps of the methods described herein.

The computing system 100 comprises a classical computer 130 coupled to a quantum computer 140 via an interface 156.

The classical computer 130 comprises a processing element 102, a memory unit 104, an input/output (I/O) interface 106, a communications interface 108, and a bus 110. Whilst Figure 1 illustrates a classical computer 130 having particular components and in a particular arrangement, it can be envisaged that the classical computer 130 comprises any suitable number of components in any suitable arrangement of components. The classical computer 130 may further comprise additional classical computing elements as known in the art.

The processing element 102 is arranged to perform operations, such as arithmetical and logical operations, on data, for example data stored on the memory device 104. The processing element 102 is of any suitable construction for performing these operations. For example, the processing element 102 comprises one or more hardware components for performing these operations, such as processors, e.g., one or more central processing units (CPUs), accelerator processors, application specific processors and/or field programmable gate arrays (FPGAs), and other equipment such as Application Specific Integrated Circuits (ASICs). The processing element 102 performs operations including: fetching instructions associated with the methods disclosed herein from program memory, such as a RAM component of the memory device 104; decoding the instructions; and executing the instructions to carry out one or more steps of the methods described herein.

The memory unit 104 is arranged to communicate with the processing element 102, for example via the bus 110. The memory unit 104 comprises one or more hardware components, such as one or more primary memory units and one or more secondary memory units. The one or more primary memory units, for example including a random access memory (RAM) unit, can temporarily store data for reading and writing purposes by the processing element 102. The primary memory may be any suitable RAM, and may comprise one or more RAM units. The present disclosure is not limited to a particular type of primary memory. The one or more secondary memory units comprise memory, i.e., computer-readable storage in the form of a non-transitory computer-readable medium or media. The memory may comprise one or more memory units employing one or more memory media, e.g. a magnetic medium such as a hard disk; an electronic medium such as a solid-state drive (SSD), flash memory or EEPROM; and/or an optical medium such as an optical disk drive. The secondary memory may be any suitable memory, and may comprise one or more secondary memory units. The present disclosure is not limited to a particular type of secondary memory. The memory stores software comprising a respective instance of at least one client application arranged to run on the processing element 102 for carrying out various steps of the methods disclosed herein. The client application may be initially provided to the classical computer 130 on suitable computer-readable storage medium or media, e.g., downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The I/O interface 106 facilitates communication between the classical computer 130 and one or more computer devices arranged to facilitate communication between a user and the classical computer 130. For example, the one or more computer devices may include, but is not limited to including, a display device, a keyboard, a speaker, a printer, any other suitable device, or any combination of devices thereof.

The communication interface 108 facilitates communication between the classical computer 130 and any other one or more computer systems and/or one or more networks. The communication interface 108 may comprise a network interface controller, network adapter, wireless NIC, or wireless adapter for communicating with a network.

The quantum computer 140 comprises a quantum computing unit 142 and a quantum memory unit 144, a plurality of coupling devices 146, a bias device 148, and a state determination device 150. The quantum computing unit 142 and/or quantum memory unit 144 comprises a number N of qubits 152. The qubits 152 may be for example, superconducting flux devices 152 having a circulating current. For example, the superconducting flux devices 152 may comprise a loop of superconducting material interrupted by at least one Josephson junction, as is known in the art. Further qubit implementations may be envisaged. The quantum computing unit 142 is configured to provide data to, and receive data from, the quantum memory unit 144 by means of a memory interface 154. A "state" of the quantum computing unit 142 corresponds to the respective state of all of the N qubits 152. An example state of a qubit is a 0 state. The 0 state may correspond to, for example, a clockwise current around the superconducting flux devices 152 which may induce a downward magnetic field. A counterclockwise current around the superconducting flux devices may induce an upwards magnetic field which references a state 1. The state of the quantum computing unit 142 may be described by a bit string having a length N. Thus, there are $2^N$ possible configurations for the state of the quantum computing unit 142. The quantum computer 140 is preferably suitable for implementing quantum circuits. Other quantum computing models may be envisaged.

Figure 2 shows an example network environment for facilitating implementation of the present invention.

The classical computer 130 may communicate with any network, such as a network 202, via the communication interface 108. The network 202 may comprise an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or any combination thereof. Any network 202 may be envisaged. The network 202 can facilitate communication between the classical computer 130 and one or more third party computer systems 204. It will be appreciated that the classical computer 130 and the third party computer systems 204 may be connected to each other directly, such that the network 202 is not needed.

Third party computing system 204 may be a network addressable computing system. Third party computing system 204 may generate, store, receive, and transmit data. Communication with the third party computing system 204 may comprise the use of one or more application programming interfaces (APIs). One or more third party computing systems 204 may be present, and each of the one or more third party computing systems 204 may be associated with a respective third party.

<u>Generating a quantum currency</u>

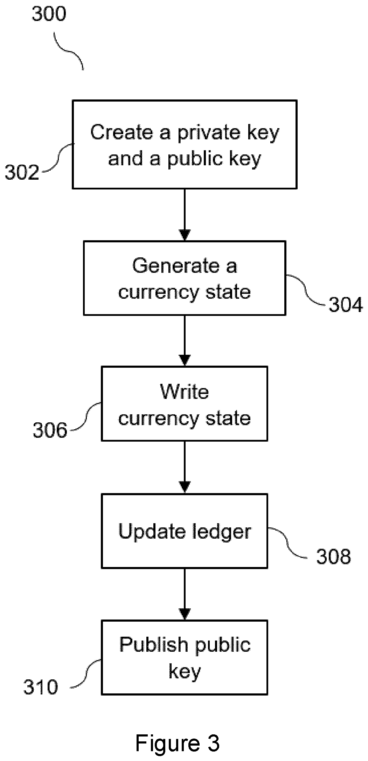

Figure 3 shows a flow diagram of a method 300 for enabling use of a quantum currency, in accordance with an aspect of the present disclosure. In particular, the method 300 is a method for generating a quantum currency that can be verified as legitimate by a quantum currency verifier. The method 300 may be carried out at a quantum currency generator, for example a central bank or other authority which issues currency, which may be implemented at a computing system such as the example computing system 100 shown in figure 1.

At step 302 the method 300 comprises creating, by a quantum currency generator, a public key $k_{public}$ and a private key $k_{private}$. As will be appreciated from the following description of the present scheme, both of the public key and the private key are needed to generate a currency state $|\text{€}\rangle$, but only the public key is needed to verify the authenticity of the currency state $|\text{€}\rangle$.

The quantum currency scheme used by the quantum currency generator is based on a Hidden Subgroup Problem in a specific non-Abelian group. Generating the public key $k_{public}$ and the private key $k_{private}$ at step 302 comprises generating a group $G$. We start by considering the non-Abelian group $G = \mathbb{Z}_n \rtimes \mathbb{Z}_3$, which is the semi-direct product of additive groups of $\mathbb{Z}_n$ and $\mathbb{Z}_3$, with the following action:

$$\phi: \mathbb{Z}_3 \to Aut(\mathbb{Z}_n)$$

$$\phi(a)(x) = (a+1)x$$

where $n = p_1^{\alpha_1} \cdots p_l^{\alpha_l}$ and $p_i > 3$. $p_i$ are the prime factors of the integer number $n$, and $\alpha_i$ are the corresponding powers, e.g. where $24 = 2^3 \times 3$ then $n = 24$, $p_1 = 2$, $p_2 = 3$, $\alpha_1 = 3$ and $\alpha_2 = 1$. It is clear that the action $\phi$ is a homomorphism and $\phi(0) = Id_{Z_n}$, where $Id$ is the identity function that maps everything to itself, i.e., $Id_{Z_n}: x \mapsto x$ for all $x \in Z_n$. The operation of the group is as follows:

$$(n_1, r_1) \cdot (n_2, r_2) = (n_1 + \phi(r_1)(n_2), r_1 + r_2)$$

By this definition, $G$ is a non-Abelian group, i.e. $(n_1, r_1) \cdot (n_2, r_2) \neq (n_2, r_2) \cdot (n_1, r_1)$.

Generating the public key $k_{public}$ and the private key $k_{private}$ at step 302 comprises choosing a number $n$ (where $n = p_1^{\alpha_1} \cdots p_l^{\alpha_l}$) and choosing a random divisor of $n$, namely $m = p_i^{\alpha_i}$. By Sylow Theorem a subgroup $H$ of order m exists, wherein $H$ is a subgroup of $G$ and m is a random divisor of $n$.

At step 302 the number $n$, divisor m and/or subgroup $H$ is chosen by the quantum currency generator to be the public key $k_{public}$ (i.e. $k_{public}$ = (G,n,m) in examples). That is correct. The public key $k_{public}$ may be shared publicly with third parties wishing to perform a verification procedure on a currency state |€⟩, for example by publishing the public key $k_{public}$ in a ledger.

At step 302 the group G and/or action $\phi$ is chosen by the quantum currency generator to be the private key $k_{private}$ (i.e. $k_{private}$ = (H,$\phi$) in examples). That is correct. The private key $k_{private}$ may be kept secret (i.e. not publicly shared) by the quantum currency generator.

At step 304 the method 300 comprises generating, by the quantum currency generator, a currency state |€⟩. The currency state |€⟩ is a quantum state that is representative of an amount of a quantum currency. In examples, the currency state |€⟩ is generated, by the quantum currency generator, using the public key $k_{public}$ and the private key $k_{private}$ generated at step 302.

Generating the currency state at step 304 comprises generating, by the quantum currency generator, an initial quantum state $|\psi_{Initial}\rangle$, wherein the initial quantum state corresponds to a superposition of the elements of $G$:

$$|\psi_{Initial}\rangle = \frac{1}{\sqrt{|G|}} \sum_{\{g \in G\}} |g\rangle$$

Next, the quantum currency generator generates a serial number. The serial number function is the function $f: G \rightarrow \{0,1\}^*$ that is constant on the cosets of $H$ and disjoint on the different cosets, i.e., $f(g) = f(s)$ iff $g \in s \cdot H$. The quantum currency generator needs to apply the action $\phi$, which is a part of the private key $k_{private}$, to construct $f$ because constructing $f$ requires consideration of $g \in s \cdot H$, where here $s \cdot H$ is the semi-product multiplication $s$ with $H$, which is dependent on the function $\phi$. That is correct. The serial number is then applied to all elements of the initial quantum state, to generate an intermediate quantum state $|\psi_{Intermediate}\rangle$:

$$|\psi_{Intermediate}\rangle = \frac{1}{\sqrt{|G|}} \sum_{\{g \in G\}} |g\rangle |f(g)\rangle$$

Next, the quantum currency generator generates the currency state |€⟩ by measuring and collapsing the intermediate quantum state (the measurement is just on the second register):

$$|€\rangle = \frac{1}{\sqrt{|H|}} \sum_{\{g \in s \cdot H\}} |g\rangle$$

In optional embodiments, the quantum currency generator generates the currency state |€⟩ by measuring and collapsing the intermediate quantum state and subsequently performing a Quantum Fourier Transform on the result, i.e. |€⟩ = $QFT(\psi_3\rangle)$, where

$$|\psi_3\rangle = \frac{1}{\sqrt{|H|}} \sum_{\{g \in s \cdot H\}} |g\rangle$$

In such examples, the quantum currency state |€⟩ is hidden by a QFT. Performing an inverse QFT on |€⟩, will not recover $|\psi_3\rangle$, but rather some periodic structure on the measurement that can be used to verify the quantum currency state without revealing the subgroup $H$.

Use of the quantum state |€⟩ to embody currency is beneficial because the currency state cannot be copied, i.e. the no-cloning theorem prevents a copy of the quantum state |€⟩ being produced by an actor having access to a physical system which stores quantum state $|\mathord{\in}\rangle$. Furthermore, both of the public key $k_{public}$ and the private key $k_{private}$ are required to generate the currency state $|\mathord{\in}\rangle$. Since the private key $k_{private}$ is kept secret (i.e. not publicly shared) by the quantum currency generator, only the quantum currency generator is able to validly create the currency state $|\mathord{\in}\rangle$ using the public key $k_{public}$ and the private key $k_{private}$.

At step 306 the method 300 comprises writing, by the quantum currency generator, the currency state $|\mathord{\in}\rangle$ to a memory of a physical system. Once written, the currency state $|\mathord{\in}\rangle$ is stored in the memory of the physical system and may be accessed by a quantum currency verifier for verification of the currency state $|\mathord{\in}\rangle$.

In an example, the physical system may be a quantum card comprising a quantum memory and a classical memory. An example computing system 100 suitable for implementing the quantum card is shown in figure 1. The quantum memory of the quantum card (e.g. the quantum computing unit 142 and/or the quantum memory unit 144) comprises a quantum system (e.g. a plurality of qubits) capable of storing the currency state $|\mathord{\in}\rangle$. The classical memory (e.g. memory unit 104) is configured to store a serial number that can be used to identify the quantum card.

At step 308 the method 300 comprises updating a ledger to store a representation of the generated currency state. The representation may be a digital representation of the generated currency state, and may include e.g. an identifier of where the generated currency state is stored (e.g. the serial number of the quantum card). The ledger may be stored locally at the quantum currency generator, in a merchant computing system or a ledger computing system, at a quantum currency verifier, and/or in cloud storage.

At step 310 the method 300 comprises publishing, by the quantum currency generator, the public key $k_{public}$. The public key $k_{public}$ may be published in the ledger. For example, the quantum currency generator may write the public key in the ledger in an unencrypted form. Since both of the public key $k_{public}$ and the private key $k_{private}$ are required to generate the currency state $|\mathord{\in}\rangle$, it is not possible for a malicious actor to generate a valid currency state $|\mathord{\in}\rangle$ using only the information on the ledger i.e. just the public key $k_{public}$.

The present method for generating a quantum currency 300 is secure because, by the no-cloning theorem, a counterfeiter cannot make another copy of the currency state $|\mathord{\in}\rangle$. To reproduce a verifiable currency state $|\mathord{\in}\rangle$, the counterfeiter would need to make a correct random guess about the private key $k_{private}$. For knowing the size of $H$, the counterfeiter needs to factor out $n$, and this is only possible using a quantum computer by Schor's algorithm. Even if the group $G$ has only one subgroup of this order $m$, reconstructing $H$ needs a knowledge of action $\phi$. In particular, reconstructing $H$ requires a knowledge of the binary operation of the group which is defined by $\phi$, because a subgroup is a subset of the group with the same action of the supergroup that is closed under that operation inherited from the original group and also is closed under inverse operation).

Verifying a quantum currency

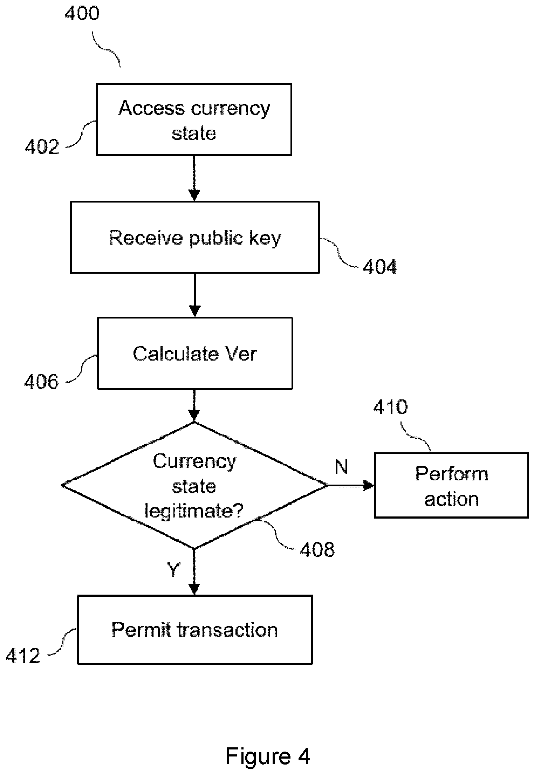

Figure 4 shows a flow diagram of a method 400 for enabling use of a quantum currency, in accordance with an aspect of the present disclosure. In particular, the method 400 is a method for verifying that a quantum state is a legitimate currency state generated by a quantum currency generator. The method 400 may be carried out at a quantum currency verifier, which may be implemented at a computing system such as the example computing system 100 shown in figure 1. As will be appreciated, the method 400 may be carried out immediately after the method 300 has been completed.

At step 402 the method 400 comprises accessing, by the quantum currency verifier, a currency state $|\mathord{\in}\rangle$ stored in a memory of a physical system. Accessing the currency state $|\mathord{\in}\rangle$ may involve e.g. connecting the memory of the physical system to the quantum currency verifier such that the quantum currency verifier is able to access the memory of the physical system.

In an example, the physical system may be part of a quantum card comprising a quantum memory and a classical memory. For example, the physical system may be the quantum memory of the quantum card. An example computing system 100 suitable for implementing a quantum card is shown in figure 1. The quantum memory of the quantum card (e.g. the quantum computing unit 142 and/or the quantum memory unit 144) comprises a quantum system (e.g. a plurality of qubits) capable of storing the currency state $|\mathord{\in}\rangle$. Accessing the currency state $|\mathord{\in}\rangle$ may involve e.g. connecting the quantum card to the quantum currency verifier such that the quantum currency verifier is able to access the quantum memory of the quantum card.

At step 404 the method 400 comprises receiving a public key $k_{public}$. In examples, the quantum currency verifier may receive the public key $k_{public}$ directly from the quantum currency generator which generated the currency state, for example via an unencrypted communication channel and in response to a request. Alternatively, the quantum currency verifier may retrieve the public key $k_{public}$ from a ledger to which the public key $k_{public}$ is written, for example in an unencrypted form. The ledger may be stored at the quantum currency generator, at a merchant computing system or a ledger computing system, at the quantum currency verifier, and/or in cloud storage.

At step 406 the method 400 comprises calculating, by the quantum currency verifier, a verification result $v$, wherein the verification result $v$ is calculated according to a verification procedure $Ver$ based on the quantum state $|\mathord{\in}\rangle$ and the public key $k_{public}$ i.e. $v = Ver(k_{public}, |\mathord{\in}\rangle)$. The verification result $v$ indicates whether the currency state $|\mathord{\in}\rangle$ corresponds to

a quantum state generated and/or written by the quantum currency generator. In other words, the verification result v indicates whether the currency state |€⟩ is legitimate in the sense of being generated by the quantum currency generator using the public key $k_{public}$ and the private key $k_{private}$.

The verification result v may take one of a pair of values (e.g. '0' and '1', 'Accept' and 'Deny', or 'Legitimate' and 'Invalid'), wherein the first value (e.g. '0', 'Accept' or 'Legitimate') indicates that the currency state |€⟩ has been generated by the quantum currency generator, and the second value (e.g. '1', 'Deny' or 'Invalid') indicates that the currency state |€⟩ is has not been generated by the quantum currency generator and/or has been tampered with, etc.

Calculating the verification result v at step 406 comprises performing a Quantum Fourier Transform, QFT, on the currency state |€⟩, comparing the result of the QFT with the public key $k_{public}$ and generating a verification result v based on the comparison, wherein the verification result v indicates whether the currency state |€⟩ is legitimate in the sense of being generated by the quantum currency generator using the public key $k_{public}$ and the private key $k_{private}$.

The quantum currency verifier has access to the currency state |€⟩ and knows the order of the subgroup H from the public key $k_{public}$. At step 406 the quantum currency verifier performs a QFT on the currency state |€⟩ without destroying the currency state |€⟩. The result of the QFT shows a periodicity of G without revealing information about H, since the function f was periodic with respect to the subgroup H.

The QFT is performed on the non-Abelian group and the irreducible representation of non-Abelian groups are in the matrix form. We consider the representation of the form $\rho{:}G \to U(V)$ where $\rho$ is a function from the group G to the set of all unitary operations $T{:}V \to V$, V is a finite dimentional Hilbert space, $U(V)$ is the set of unitary operators on the finite dimensional complex Hilbert space. Each member of $U(V)$ is associated with a quantum gate, and every Quantum gate can be represented by a unitary operation or tensor product of unitary operations. So, the representation here are based on the quantum gates. The Fourier transform of the functions $f{:}G \to \mathbb{C}^*$ is of the following form:

$$\hat{f}(\rho) = \int_G f(g)\,\rho(g)\,dg$$

Where dg is the Haar measure (a translation invariant measure) on G. Here f(g) is a complex number and $\rho(g)$ is a unitary matrix. Computing the Fourier transform in this context reveals periodicity in the character space (i.e. the periodicity of f which is based on the specific subgroup H) when restricted to the class functions, i.e. the functions that are constants on the conjugate classes. So the verification procedure $Ver(k_{public}, |€⟩)$ can provide a verification result v without destroying the currency state |€⟩.

The scheme used by the quantum currency generator to generate currency state |€⟩ has completeness error $\varepsilon > 0$, if $Ver(k_{public}, |€⟩) = Accept$ with probability at least $1 - \varepsilon$, and has a soundness error $\delta > 0$, if any quantum circuit C that tries to map q valid banknotes |€₁⟩,···,|€g⟩ to r = poly(n) alleged banknotes |c₁⟩, ···, |cr⟩, which are entangled, such that:

$$Pr\big[\text{Count}\big(k_{public}, C\big(k_{public}, |\mathbb{\euro}_1\rangle, \cdots, |\mathbb{\euro}_q\rangle\big) \geq q\big] \leq \delta$$

where Count is a quantum circuit that counts the indices that pass the verification test. The scheme is secure if its completeness error is less that $\frac{1}{3}$ and its soundness error is negligible.

At step 408 the method 400 comprises determining whether the currency state is legitimate. The determination is made by inspecting the verification result v calculated in step 408.

If the verification result v calculated in step 406 indicates that the currency state |€⟩ is not legitimate (in which case the 'N' branch from step 408 is followed), then the method 400 proceeds to step 410 where an action is performed by the quantum currency verifier.

Where the verification result v calculated in step 406 indicates that the currency state |€⟩ is not legitimate then this may indicate that the currency state |€⟩ is being used by a malicious actor, and/or that the currency state |€⟩ has been tampered with or is a copy or a forgery. To ensure that the currency state |€⟩ cannot be used by said malicious actor, the action performed at step 410 may comprise blocking a transaction and/or modifying the currency state |€⟩. Modifying the currency state |€⟩ may comprise measuring and/or destroying the currency state |€⟩. For example, destroying the currency state |€⟩ may comprise causing the physical system which stores the currency state |€⟩ to enter its ground state. This will effectively 'wipe' the currency state |€⟩ from the physical system. Where the quantum system is a collection of qubits, destroying the currency state |€⟩ may comprise causing each qubit to enter its ground state.

If the verification result v calculated in step 406 indicates that the currency state |€⟩ is legitimate (in which case the 'Y' branch from step 408 is followed), then the method 400 proceeds to step 412 where a transaction is permitted. For example, the quantum currency verifier may send an instruction or notification to a third party computing system indicating that the currency state $|€\rangle$ is legitimate and that the currency state $|€\rangle$ may be used to carry out a transaction, such as a payment transaction. Such a transaction may involve reading, modifying and/or destroying the currency state $|€\rangle$ stored in the physical system.

The present method 400 for verifying that a quantum state is a legitimate currency state generated by a quantum currency generator is advantageous because applying a QFT to the currency state $|€\rangle$ reveals only the periodicity of the structure of the subgroup, not the entire structure of the subgroup, without destroying the currency state $|€\rangle$. Therefore the integrity of the currency state $|€\rangle$ is maintained even after the verification procedure has been performed.

Using a quantum currency

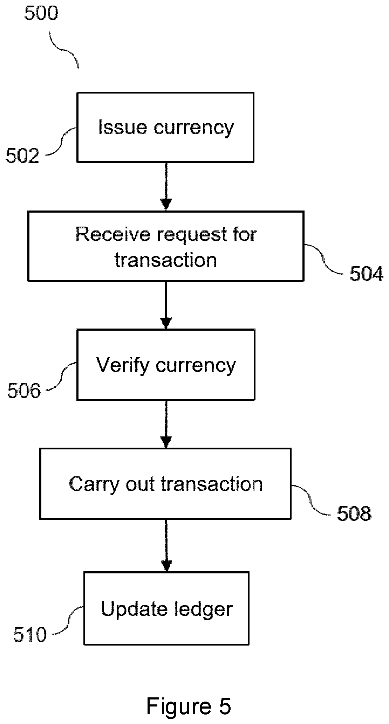

Figure 5 shows a flow diagram of a method 500 for enabling use of a quantum currency, in accordance with an aspect of the present disclosure. In particular, the method 500 is a method for using a quantum state as a currency to effect a transaction. The method 500 may be carried out at a quantum currency transaction system, which may be implemented at a computing system such as the example computing system 100 shown in figure 1.

At step 502 the method 500 comprises issuing a quantum currency. The quantum currency may be generated in accordance with the method 300, and the generated quantum currency may be stored in a physical system, such as a quantum memory of a quantum card.

To effect issuing the quantum currency at step 502, the quantum currency transaction system may send a request, instruction or notification to a quantum currency generator requesting generation of quantum currency. In response, the quantum currency generator may generate the quantum currency in accordance with the method 300, and send a response message to the quantum currency transaction system indicating that a currency state is stored in a physical system and/or that a ledger has been updated.

At step 504 the method 500 comprises receiving a request for a transaction. In particular, a request for a transaction may be received by the quantum currency transaction system. The request for a transaction may be received in the form of a command, and may include an amount of quantum currency (e.g. a number of units of quantum currency requested such as one unit of quantum currency). The transaction may be a monetary transaction involving the quantum currency. In examples, the user may wish to use their quantum card to pay an amount of quantum currency to the operator of the quantum currency transaction system. Alternatively, the user may wish to use their quantum card to receive an amount of quantum currency from the operator of the quantum currency transaction system.

At step 506 the method 500 comprises verifying the quantum currency. The quantum currency may be verified in accordance with the method 400.

To effect verifying the quantum currency at step 506, the quantum currency transaction system may send a request, instruction or notification to a quantum currency verifier requesting verification of the quantum currency. In response, the quantum currency verifier may verify the quantum currency stored in the physical system in accordance with the method 400, and send a response message to the quantum currency transaction system indicating that the currency state stored in the physical system has been verified as legitimate. As will be appreciated, it is possible that the response message may indicate that the currency state stored in the physical system is not legitimate, in which case the method 500 ends.

After the quantum currency has been verified as legitimate at step 506, the method 500 proceeds to step 508 where the transaction is carried out. Carrying out the transaction at step 508 may comprise reading, modifying and/or destroying the currency state stored by the physical system. Destroying the currency state may comprise causing the physical system to enter its ground state. This will effectively 'wipe' the currency state from the physical system. Where the quantum system is a collection of qubits, destroying the currency state may comprise causing each qubit to enter its ground state.

At step 510 the method 500 comprises updating the ledger. In particular, the ledger is updated by the quantum currency transaction system to reflect the changes made to the currency state, and the transaction that has taken place.

Example system

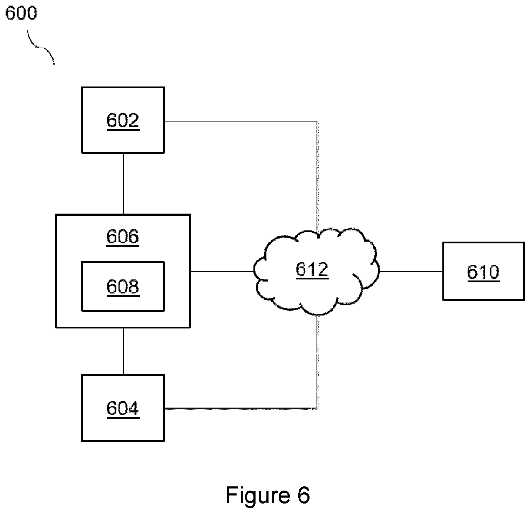

Figure 6 shows an example system 600 for enabling use of a quantum currency, in accordance with an aspect of the present disclosure. The example system 600 can be used to implement any or all of the methods 300, 400 and 500 explained above and shown in figures 3 to 5.

The system 600 comprises: a quantum currency generator 602; a quantum currency verifier 604; and a physical system 606 comprising a memory 608 configured to store a currency state. The system 600 further comprises a third party computing system 610, for example a merchant computing system. The quantum currency generator 602; a quantum currency verifier 604; and a physical system 606 may be individually or collectively embodied by the example computing system 100 shown in figure 1.

The quantum currency generator 602 is configured for use in a quantum currency system, and for example is able to carry out the method 300 shown in figure 3. The quantum currency generator 602 is configured to generate a currency state |€⟩ that is representative of an amount of a quantum currency. The quantum currency generator 602 is configured to write the currency state |€⟩ to the memory 608 of the physical system (e.g. the quantum memory of a quantum card).

The quantum currency verifier 604 is also configured for use in a quantum currency system, and for example is able to carry out the method 400 shown in figure 4. The quantum currency verifier 604 is configured to generate the verification result v which indicates whether the currency state in the memory 608 of the physical system 606 corresponds to a currency state |€⟩ generated and/or written by the quantum currency generator 602.

The physical system 606 is also configured for use in a quantum currency system, and for example comprises a memory 608 configured to store a currency state |€⟩. In particular, the memory 608 is configured to store a currency state |€⟩ generated by the quantum currency generator 602. The memory 608 is further configured to be accessed by the quantum currency verifier 604 to enable the currency state |€⟩ stored in the memory 608 to be verified.

In an example, the physical system 606 may be a quantum card comprising a quantum memory and a classical memory. An example computing system 100 suitable for implementing the physical system 606 is shown in figure 1. The quantum memory of the quantum card (e.g. the quantum computing unit 142 and/or the quantum memory unit 144) comprises a quantum system (e.g. a plurality of qubits) capable of storing the currency state |€⟩. The classical memory (e.g. memory unit 104) is configured to store a serial number that can be used to identify the quantum card.

The third party computing system 610, for example a merchant computing system or a ledger computing system, is shown in communication with the quantum currency generator 602, the quantum currency verifier 604 and the physical system 606 via network 612. The third party computing system 610 may be similar to the third party computing system 204 shown in figure 2. The network 612 may be similar to the network 202 shown in figure 2. The third party computing system 610 may store a ledger of information, such as the ledger discussed above in relation to methods 300, 400 and 500. Alternatively, the ledger discussed above in relation to methods 300, 400 and 500 may be stored at the quantum currency generator 602 and/or the quantum currency verifier 604.

### Example implementation using real data

The following is a simple example using real data.

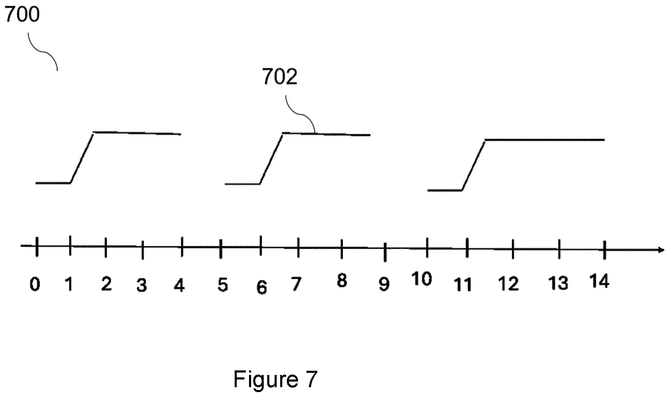

Let group $G = Z_{15}$, subgroup $H = \{0,5,10\}$ and $s = 0$. We choose the function $f: Z_{15} \rightarrow \{1,2\}$ so that $f(0) = f(1) = 1$, $f(2) = f(3) = f(4) = 2$, $f(5) = f(6) = 1$, $f(7) = f(8) = f(9) = 2$, etc., as shown in figure 7. The function $f$ (denoted 702 in figure 7) is periodic, i.e., $f(x + 5) = f(x)$. In this example, $k_{public} = (Z_{15}, 15, 3)$ and $k_{private} = H$.

The quantum currency state can be prepared in three steps:

1. First an initial quantum state $|\psi_1\rangle$ is prepared as the superposition of all elements of $G$, i.e.,

$$|\psi_1\rangle = \frac{1}{\sqrt{15}} \left( |0\rangle + |1\rangle + \cdots + |14\rangle \right)$$

2. Next, an intermediate quantum state $|\psi_2\rangle$ is prepared by applying the function $f$ to the initial quantum state $|\psi_1\rangle$, i.e.,

$$|\psi_2\rangle = \frac{1}{\sqrt{15}} \left( |0\rangle|1\rangle + |1\rangle|1\rangle + \cdots + |14\rangle|2\rangle \right)$$

3. Next, the quantum state $|\psi_3\rangle$ is generated by measuring the second register, the result being:

$$|\psi_3\rangle = \frac{1}{\sqrt{3}} \left( |0\rangle + |5\rangle + |10\rangle \right)$$

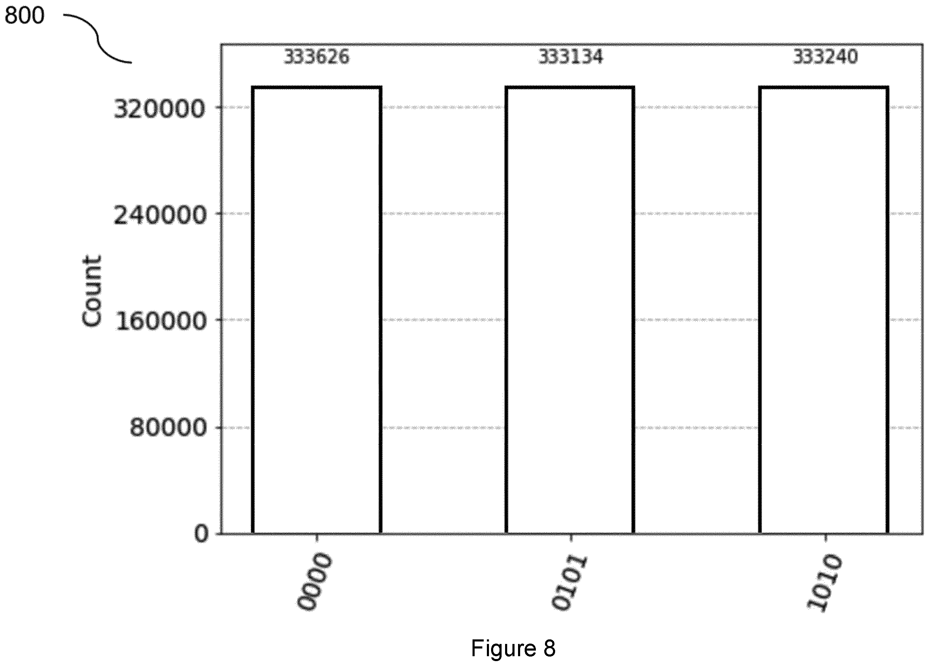

The result of measuring this quantum state $|\psi_3\rangle$ one million times is shown in the histogram 800 of figure 8. The results shown in figure 8 were produced by the qiskit quantum simulator on 1 million shots. The histogram of figure 8 shows spikes on the binary representations of 0, 5 and 10.

4. We may apply a Quantum Fourier Transform on $|\psi_3\rangle$ to obtain the quantum currency state:

$$|\psi_3\rangle \rightarrow QFT|\psi_3\rangle$$

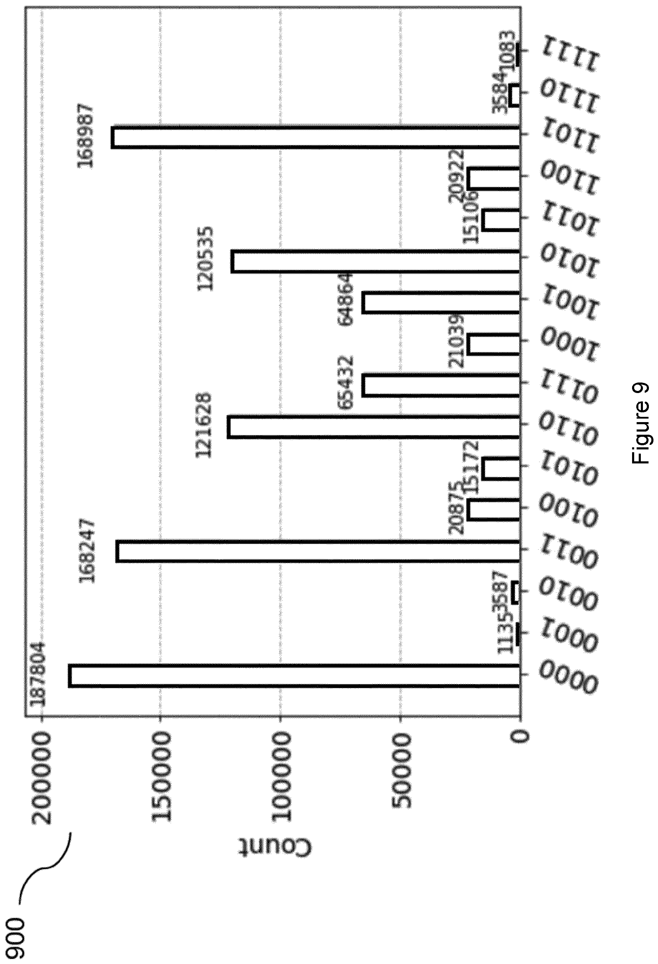

This state $QFT|\psi_3\rangle$ may be used as a quantum currency state |€⟩ (i.e. |€⟩ = $QFT(|\psi_3\rangle)$). In these examples, |€⟩ is hidden by a QFT. Performing an inverse QFT on $|\text{€}\rangle$, will not recover $|\psi_3\rangle$, but rather some periodic structure on the measurement that can be used to verify the quantum currency state but not reveal the actual subgroup $H$. The result of measuring the state $QFT|\psi_3\rangle$ one million times is shown in the histogram 900 of figure 9. The results shown in figure 9 were produced by the qiskit quantum simulator on 1 million shots.

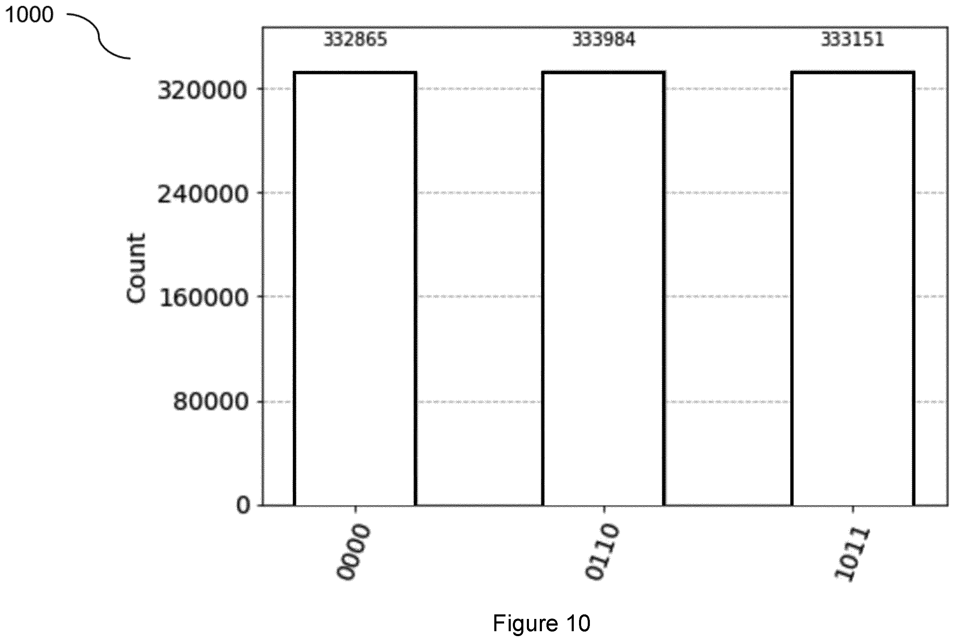

For the verification of the currency state $QFT|\psi_3\rangle$, we again apply QFT on this state and the perform the measurement one million times. The result of such measurements is shown in the histogram 1000 of figure 10. The results shown in figure 10 were produced by the qiskit quantum simulator on 1 million shots. Note that there is some periodicity in the results of this histogram but not on 0, 5 and 10, but rather on 0, 6, and 11. This allows us to verify the quantum currency state without revealing the initial ground state. Note that in this example, the private key $H = \{0,5,10\}$ was not revealed during the verification process.

Some embodiments may assign computer processing tasks to recipient processors, for example, but not limited to CPUs, GPUs, DSPs, GP-GPUs, quantum processor and/or processors optimised for artificial intelligence tasks. In such embodiments, the processors are the recipients and the processing tasks are the opportunities. In such embodiments, in for example, a complex cloud computing infrastructure, a large number of tasks, of differing types, requiring execution may be received and a large number of processors may be housed within the cloud computing infrastructure.

The description provided herein may be directed to specific implementations. It should be understood that the discussion provided herein is provided for the purpose of enabling a person with ordinary skill in the art to make and use any subject matter defined herein by the subject matter of the claims.

It should be intended that the subject matter of the claims not be limited to the implementations and illustrations provided herein, but include modified forms of those implementations including portions of implementations and combinations of elements of different implementations in accordance with the claims. It should be appreciated that in the development of any such implementation, as in any engineering or design project, numerous implementation-specific decisions should be made to achieve a developers' specific goals, such as compliance with system-related and business related constraints, which may vary from one implementation to another. Moreover, it should be appreciated that such a development effort may be complex and time consuming, but would nevertheless be a routine undertaking of design, fabrication, and manufacture for those of ordinary skill having benefit of this disclosure.

Reference has been made in detail to various implementations, examples of which are illustrated in the accompanying drawings and figures. In the detailed description, numerous specific details are set forth to provide a thorough understanding of the disclosure provided herein. However, the disclosure provided herein may be practiced without these specific details. In some other instances, well-known methods, procedures, components, circuits, and networks have not been described in detail so as not to unnecessarily obscure details of the embodiments.

It should also be understood that, although the terms first, second, etc. may be used herein to describe various elements, these elements should not be limited by these terms. These terms are only used to distinguish one element from another. For example, a first element could be termed a second element, and, similarly, a second element could be termed a first element. The first element and the second element are both elements, respectively, but they are not to be considered the same element.

The terminology used in the description of the disclosure provided herein is for the purpose of describing particular implementations and is not intended to limit the disclosure provided herein. As used in the description of the disclosure provided herein and appended claims, the singular forms "a," "an," and "the" are intended to include the plural forms as well, unless the context clearly indicates otherwise. The term "and/or" as used herein refers to and encompasses any and all possible combinations of one or more of the associated listed items. The terms "includes," "including," "comprises," and/or "comprising," when used in this specification, specify a presence of stated features, integers, steps, operations, elements, and/or components, but do not preclude the presence or addition of one or more other features, integers, steps, operations, elements, components and/or groups thereof.

As used herein, the term "if" may be construed to mean "when" or "upon" or "in response to determining" or "in response to detecting," depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]," depending on the context. The terms "up" and "down"; "upper" and "lower"; "upwardly" and "downwardly"; "below" and "above"; and other similar terms indicating relative positions above or below a given point or element may be used in connection with some implementations of various technologies described herein.

While the foregoing is directed to implementations of various techniques described herein, other and further implementations may be devised in accordance with the disclosure herein, which may be determined by the claims that follow. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

**Claims**

1. A method for implementation by a quantum currency generator, the method comprising:

   creating a public key and a private key, wherein the public key comprises a number $n$, a divisor $m$ and/or a subgroup $H$ of order $m$, and wherein the private key comprises a group $G$ and/or an action $\phi$, wherein $H$ is a subgroup of $G$ and wherein $m$ is a random divisor of $n$;
   generating a currency state, wherein the currency state is a quantum state that is representative of an amount of a quantum currency and wherein the currency state is generated using the private key and the public key;
   writing the currency state to a memory of a physical system such that the currency state is stored in the memory of the physical system and is configured to be accessed by a quantum currency verifier for verification of the currency state.

2. The method of any preceding claim, wherein the method further comprises:
   publishing the public key.

3. The method of any preceding claim, wherein generating the currency state comprises:

   generating an initial quantum state;
   generating an intermediate quantum state; and
   generating the currency state by measuring and collapsing the intermediate quantum state.

4. The method of any preceding claim, wherein generating the intermediate quantum state comprises:

   generating a serial number,
   applying the serial number to the initial quantum state to generate the intermediate quantum state.

5. The method of any preceding claim, wherein the memory of the physical system comprises a plurality of qubits, and wherein the method further comprises:
   storing the currency state in the plurality of qubits.

6. The method of any preceding claim, wherein the method further comprises:
   storing a representation of the generated currency state in a ledger.

7. A method for implementation by a quantum currency verifier, the method comprising:

   accessing a currency state stored in a memory of a physical system;
   receiving, from a quantum currency generator, a public key; and
   calculating a verification result, wherein the verification result is calculated using the quantum state and the public key, and wherein the verification result indicates whether the currency state corresponds to a quantum state generated and/or written by a quantum currency generator.

8. The method of claim 7, wherein calculating the verification result comprises:

   performing a Quantum Fourier Transform, QFT, on the currency state; and
   generating a verification result based on a comparison of the QFT with the public key.

9. The method of claim 7 or claim 8, wherein the method further comprises:
   permitting a transaction in response to the verification result indicating that the currency state corresponds to a quantum state generated and/or written by a quantum currency generator.

10. The method of any one of claims 7 to 9, wherein the method further comprises:
    blocking a transaction in response to the verification result indicating that the currency state corresponds to a quantum state generated and/or written by a quantum currency generator.

11. The method of any one of claims 7 to 10, wherein the method further comprises:
    erasing the memory of the physical system in response to the verification result indicating that the currency state does not correspond to a quantum state generated and/or written by a quantum currency generator.

**12.** The method of claim 11, wherein erasing the memory of the physical system comprises collapsing the currency state.

**13.** The method of claim 11 or claim 12, wherein the memory of the physical system comprises a plurality of qubits, and wherein erasing the memory of the physical system comprises:
causing each qubit of the plurality of qubits to be in a ground state.

**14.** A system for enabling use of a quantum currency, the system comprising:

a quantum currency generator configured to carry out the method of any one of claims 1 to 6;
a quantum currency verifier configured to carry out the method of any one of claims 7 to 13; and
a physical system comprising a memory configured to store a currency state.

**15.** A physical system for storing a quantum currency, the physical system comprising a memory, wherein the memory is configured for:

storing a currency state generated by a quantum currency generator; and
being accessed by a quantum currency verifier for verification of the currency state.

100

130

| 102 |
| 104 |
| 106 |
| 108 |
| 110 |

156

| 146 | 148 |
| 150 | 152 |

140

| 142 |

154

| 144 |

## Figure 1

200

100

202

204

## Figure 2

300

302 — Create a private key
and a public key

Generate a
currency state — 304

306 — Write
currency state

Update ledger — 308

310 — Publish public
key

Figure 3

400

Access currency
state

402

Receive public key

404

Calculate Ver

406

Currency
state
legitimate?

N → Perform
action

410

408

Y

Permit transaction

412

Figure 4

500

Issue currency

502

↓

Receive request for transaction

504

↓

Verify currency

506

↓

Carry out transaction

508

↓

Update ledger

510

Figure 5

600

Figure 6

Figure 7

EP 4 629 557 A1

Figure 8

Figure 9

Figure 10

Europäisches
Patentamt
European
Patent Office
Office européen
des brevets

# EUROPEAN SEARCH REPORT

**Application Number**

EP 24 16 8520

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARK ZHANDRY: "Quantum Money from Abelian Group Actions", ARXIV.ORG, CORNELL UNIVERSITY LIBRARY, 201 OLIN LIBRARY CORNELL UNIVERSITY ITHACA, NY 14853, 7 March 2024 (2024-03-07), XP091691087, * section 1.1 * | 1-15 | INV. H04L9/08 G06Q20/06 |
| X | SCOTT AARONSON ET AL: "Quantum Money from Hidden Subspaces", IACR, INTERNATIONAL ASSOCIATION FOR CRYPTOLOGIC RESEARCH, vol. 20120411:155350, 11 April 2012 (2012-04-11), pages 1-46, XP061006069, DOI: 10.1145/2213977.2213983 [retrieved on 2012-04-11] * sections 3 and 5 * | 1-15 | |
| A | SHMUELI OMRI: "Public-key Quantum money with a classical bank", CREATIVITY AND COGNITION, ACMPUB27, NEW YORK, NY, USA, 9 June 2022 (2022-06-09), pages 790-803, XP059037023, DOI: 10.1145/3519935.3519952 ISBN: 978-1-4503-9343-0 * section 4; figure 1 * | 1-15 | **TECHNICAL FIELDS SEARCHED (IPC)**<br><br>H04L<br>G07G<br>G06Q |

The present search report has been drawn up for all claims

| Place of search | Date of completion of the search | Examiner |
|---|---|---|
| Munich | 18 September 2024 | Billet, Olivier |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)